Europäisches Patentamt

European Patent Office

Office européen des brevets

(19)

(11) **EP 0 715 189 B1**

(12) **FASCICULE DE BREVET EUROPEEN**

(45) Date de publication et mention
de la délivrance du brevet:
**10.06.1998 Bulletin 1998/24**

(51) Int Cl.⁶: **G02B 5/18**, H01S 3/00

(21) Numéro de dépôt: **95402444.4**

(22) Date de dépôt: **02.11.1995**

(54) **Procédés de fabrication d'un réseau réfléchissant de diffraction optique**

Herstellungsverfahren eines reflektierenden optischen Beugungsgitters

Fabrication process of a reflective optical diffraction grating

(84) Etats contractants désignés:
**DE GB**

(30) Priorité: **03.11.1994 FR 9413134**

(43) Date de publication de la demande:
**05.06.1996 Bulletin 1996/23**

(73) Titulaire: **FRANCE TELECOM
75015 Paris (FR)**

(72) Inventeur: **Sermage, Bernard
F-94230 Cachan (FR)**

(74) Mandataire: **Schmidt, Christian
Cabinet BALLOT-SCHMIDT,
16, avenue du Pont Royal
94230 Cachan (FR)**

(56) Documents cités:
EP-A- 0 240 776 US-A- 4 748 614
US-A- 4 961 195

- APPLIED OPTICS, vol. 29, no. 28, 1 octobre 1990, New York US, pages 4259-4267; H. ANDERSSON et al.: 'Single photomask, multilevel kinoforms in quartz and photoresist : manufacture and evaluation'
- OPTICS LETTERS, vol. 16, no. 21, 1 novembre 1991, pages 1704-1706, XP000232625; J.M. SIMON et al.: 'General compressor for ultrashort pulses with nonlinear chirp'
- NAVY TECHNICAL DISCLOSURE BULLETIN, vol. 10, no. 4, juin 1985, Arlington US, pages 25-32; B.H. RIPIN : 'Induced spatial incoherence optical delay element'
- PATENT ABSTRACTS OF JAPAN, vol. 9, no. 236 (P-390) 21 septembre 1985; & JP-A-60 091 302

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

# Description

L'invention concerne des procédés de fabrication d'un réseau réfléchissant pour la diffraction optique de rayons lumineux.

Un réseau est une surface optique qui présente une perturbation périodique et qui disperse la lumière par transmission ou par réflexion. La perturbation peut être une fente (transmission), un trait ou un sillon (réflexion), ou peut encore être obtenue par impression d'une frange sinusoïdale sur une plaque photographique (réseau sinusoïdal).

Si on considère un réseau plan à sillons rectilignes, parallèles et équidistants selon la largeur du réseau, en plaçant une source ponctuelle au foyer d'une lentille collimatrice, la lumière est réfléchie dans la direction de réflexion régulière (maxima d'interférence central, qui contient toutes les radiations de la source) et aussi, dans des directions déterminées de maxima d'interférences. Les positions des maxima d'interférences dépendent de la longueur d'onde.

Ce phénomène dispersif est en particulier utilisé en spectroscopie, pour connaître la structure électronique des atomes et molécules à partir des spectres optiques obtenus : spectrographes, spectromètres ou autres utilisent en effet un monochromateur à prisme ou réseau associé à un récepteur. Le récepteur peut être un appareil d'enregistrement sur une plaque photographique (spectrographe) ou un détecteur photo-électrique, par exemple à photomultiplicateur (spectromètre).

Dans des applications récentes, le monochromateur est utilisé pour étudier les impulsions optiques ultra-courtes, de l'ordre de la picoseconde. L'objet de ces études est notamment l'analyse de la luminescence de matériaux semi-conducteurs, à partir de l'évolution dans le temps du spectre en sortie du monochromateur.

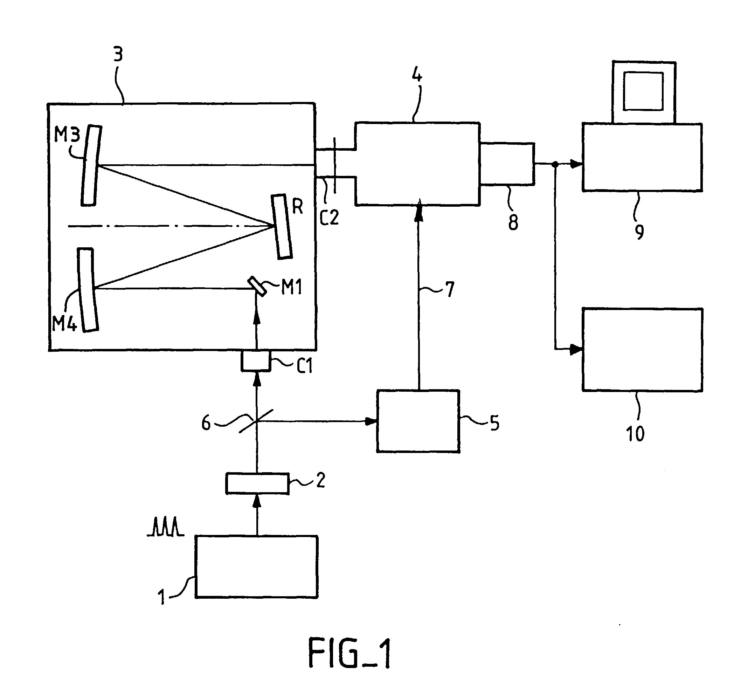

Pour cela, on utilise (Figure 1) un laser 1 produisant des impulsions ultra-courtes de l'ordre de la picoseconde à une fréquence de l'ordre de 100 mégahertz vers un échantillon de semi-conducteur 2 dont on veut étudier la luminescence.

La lumière incidente arrive sur le collimateur d'entrée C1 du monochromateur 3 (fente d'entrée verticale, lentille) puis est réfléchie et dispersée (miroirs M1, M4, M3, réseau R) pour fournir le spectre de sortie sur le collimateur de sortie C2 (fente de sortie horizontale, lentille).

En sortie du monochromateur, on place une caméra à balayage de fente dite "streak camera" dans la littérature anglo-saxonne, dont la haute résolution temporelle permet l'analyse des phénomènes du domaine de la picoseconde. De manière simplifiée (non représentée), la caméra comprend un tube à balayage avec une photocathode et une électrode à mailles entre lesquelles sévit un champ électrique intense, un circuit de déflexion, un photomultiplicateur et un écran phosphorescent.

Le principe général de fonctionnement de la caméra est le suivant : une fente d'entrée et une lentille focalisent la lumière incidente sur la photocathode du tube. Les photons convertis en électrons sont accélérés et conduits vers le champ de déflexion où ils sont balayés à haute-vitesse dans la direction perpendiculaire à la fente d'entrée (la direction verticale dans l'exemple, la fente d'entrée étant horizontale). Ils passent alors dans le photomultiplicateur et forment l'image optique en bombardant l'écran phosphorescent.

Le temps auquel les électrons sont libérés de la photocathode peut être déterminé par leur angle de déflexion donné dans l'exemple par leur position verticale sur l'écran phosphorescent. Ainsi, l'axe des temps correspond à l'axe perpendiculaire à la fente d'entrée, sur l'écran phosphorescent de la caméra.

En utilisant comme lumière incidente le spectre de sortie du monochromateur sur la fente de sortie verticale de ce dernier, on obtient comme deuxième dimension sur l'écran phosphorescent selon l'axe perpendiculaire à l'axe des temps, l'axe des longueurs d'onde.

Ainsi, dans l'exemple, on dispose de l'axe des temps, axe horizontal sur l'écran phosphorescent et de l'axe des longueurs d'onde, axe vertical sur l'écran phosphorescent.

Pour que le dispositif fonctionne, il faut encore synchroniser la tension de balayage (ou de déflexion) de la caméra à balayage de fentes sur l'arrivée des électrons dans le champ de déflexion. On utilise par exemple un détecteur à photodiode 5, vers lequel on dévie une partie de la lumière incidente (lame 6) et qui fournit à la caméra 4 un signal de déclenchement (7), pour synchroniser la tension de balayage du circuit de déflexion de la caméra.

On peut alors observer des traînées sur l'écran de sortie de la caméra à balayage de fentes, qui montrent l'évolution de la luminescence émise par l'échantillon excité par le laser, en fonction de la longueur d'onde (axe horizontal) et du temps (axe vertical). La luminescence peut ainsi être analysée par un circuit de lecture de sortie qui comprend par exemple une caméra vidicon 8 placée en sortie de la caméra à balayage de fente et qui délivre un signal vidéo vers des circuits périphériques comme un moniteur vidéo 9, un analyseur temporel 10, etc.

Le dispositif décrit permet ainsi de faire de la spectroscopie résolue en temps.

Un problème rencontré dans l'analyse de l'image obtenue est lié au réseau du monochromateur.

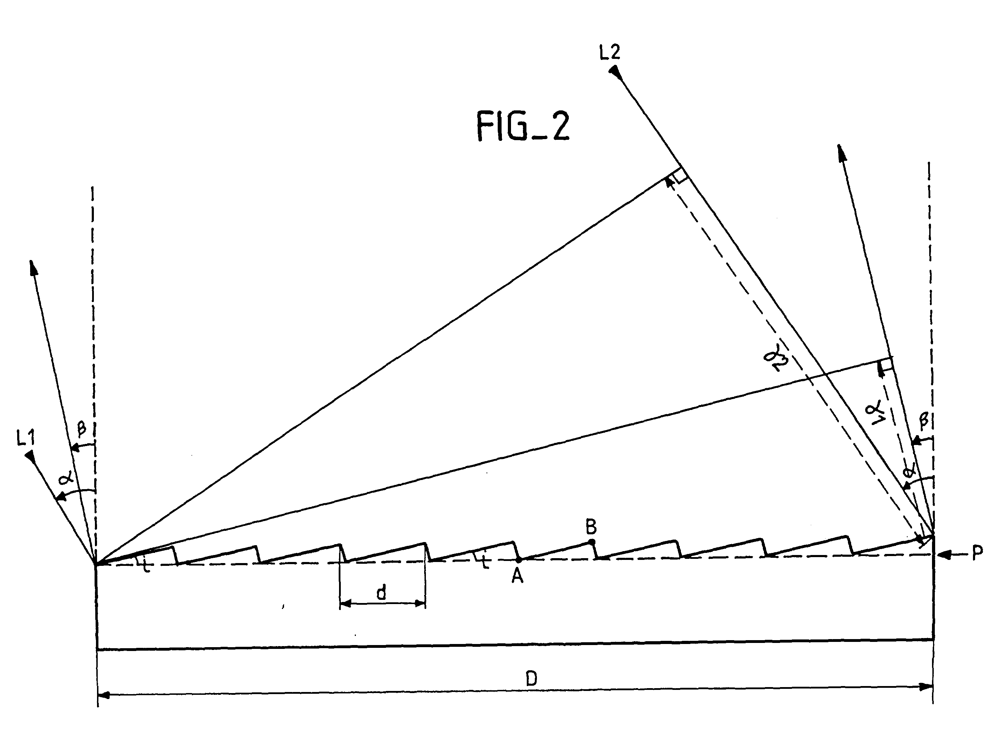

En effet, le réseau qui disperse spectralement une impulsion lumineuse, élargit aussi temporellement l'impulsion, du fait de la différence de marche optique. Le phénomène est représenté sur la figure 2, pour deux rayons arrivant chacun sur une des deux extrémités du réseau.

Dans l'exemple, le réseau est à sillons espacés d'un pas $d$. Il a une largeur $D$ sur laquelle sont réalisés des sillons parallèles et équidistants (de $d$). La densité de sillons par millimètre est notée $N = 1/d$.

Le sillon pourrait être un simple trait gravé. Dans l'exemple, il a une section droite triangulaire. Les rayons arrivent sur la surface, par exemple AB, inclinée d'un angle i par rapport au plan P du réseau.

Le profil du sillon influe sur la répartition de l'énergie lumineuse dans les différents ordres d'interférence. Le profil à section droite triangulaire est particulièrement utilisé dans les monochromateurs pour son aptitude à concentrer l'énergie lumineuse dans un seul ordre d'interférences.

Prenons maintenant deux rayons lumineux L1 et L2 de longueur d'onde λ, arrivant sur le réseau sous une même incidence α par rapport à la normale au plan P du réseau. Le rayon L1 arrive sur l'extrémité A, le rayon L2 arrive sur l'autre extrémité B. Ils sont diffractés suivant l'angle de diffraction β (par rapport à la normale au plan P du réseau).

L'équation des réseaux s'écrit alors :

$$(1) \qquad m\lambda = d(\sin\alpha + \sin\beta) = 1/N(\sin\alpha + \sin\beta)$$

où m est l'ordre d'interférences considéré (m entier positif ou négatif).

Le chemin optique parcouru par L1 sera plus long dans l'exemple que celui parcouru par L2. La différence $\Delta\gamma$ s'écrit dans le cas de la figure 2 :

$$(2) \qquad \Delta\gamma = \gamma 2 + \gamma 1 = D(\sin\alpha + \sin\beta)$$

soit, en utilisant l'équation (1) :

$$\Delta\gamma = DmN\lambda$$

L'écart de temps pour le premier ordre d'interférence (m = 1) s'écrit alors :

$$(3) \qquad \Delta t = \Delta\gamma/C = DN\lambda/C$$

La dispersion temporelle $\Delta t$ pour une longueur d'onde λ donnée et un ordre d'interférence m déterminé, ne dépend que de la largeur D et de la densité N de traits (sillons) du réseau. Dans un exemple numérique en relation avec l'étude des impulsions ultra-courtes (picosecondes), on a :

D = 60 mm (millimètres)
N = 1200 traits/mm

soit d = 1/N = 0,83 μm (micromètres).

Pour une source monochromatique de longueur d'onde λ = 0,76 μm, on a alors pour m = 1 :

$\Delta t = DN\lambda/C = 60.1200.0,76.10^{-6}/3.10^{8}$
$\Delta t = 182$ picosecondes.

Vu l'ordre de grandeur des phénomènes à observer (impulsion de l'ordre de la picoseconde), cette dispersion temporelle est très gênante.

On serait alors tenté de réduire les grandeurs caractéristiques N et D du réseau.

Par exemple, en réduisant la largeur D du réseau à 4 millimètres, on obtient une dispersion temporelle $\Delta t$ de 12 picosecondes.

Si l'on diminue la densité de traits de la moitié (N = 600 traits/mm), on obtient $\Delta t = 6$ picosecondes.

Il est cependant nécessaire d'obtenir la plus grande luminosité possible dans l'image de sortie. C'est déjà ce qui conduit à préférer un profil particulier des sillons du réseau (section droite triangulaire), comme expliqué ci-dessus.

Or, réduire la largeur du réseau, c'est aussi réduire la luminosité de sortie. C'est inacceptable.

Il est aussi nécessaire d'obtenir la plus grande résolution spectrale. La résolution spectrale $\mathfrak{R}$ d'un réseau chiffre son aptitude à permettre la distinction de deux longueurs d'onde très proches différentes de $\Delta\lambda$ :

$$(4) \qquad \mathfrak{R} = \lambda/\Delta\lambda = m.D.N$$

Pour le premier ordre d'interférence (m = 1), on a donc :

$$(5) \qquad \mathfrak{R} = \lambda/\Delta\lambda = D.N$$

Par ailleurs, la relation suivante :

$$(6) \qquad \Delta t.\Delta\lambda = \lambda^2/C$$

limite la résolution spectrale pour une dispersion temporelle $\Delta t$ donnée.

Ainsi donc, si l'on choisit N et L en sorte d'obtenir une dispersion temporelle minimum, on réduit alors la résolution spectrale du réseau.

Dans l'exemple numérique de tout à l'heure, pour λ = 0,76 μm, avec N = 1200 traits/mm et D = 60mm, on a vu que l'on a alors $\Delta t = 182$ picosecondes. On a alors $\Delta\lambda = \lambda^2/\Delta t.C = 0,01$ nanomètre.

Mais si N = 600 traits/mm et D = 4 mm, on a vu que, l'on avait alors $\Delta t = 6$ picosecondes, mais alors $\Delta\lambda = \lambda^2/\Delta t.C = 0,32$ nanomètre : la résolution spectrale $\mathfrak{R} = \Delta\lambda/\lambda$ est alors considérablement diminuée. Il y a donc toujours un compromis inévitable entre la résolution spectrale et la dispersion temporelle. Cependant, le monochromateur limite lui-même la résolution spectrale du fait de la largeur de la fente d'entrée et de la résolution spectrale du système de détection, constitué par la caméra à balayage de fentes et le tube vidicon (figure 1). On a donc intérêt à diminuer la résolution spectrale du réseau de façon à l'adapter à la résolution spectrale du monochromateur ou plus généralement à la résolution spectrale désirée. On diminue ainsi du même coup la dispersion temporelle.

On connait du document US 4,748,614 un réseau périodique particulier permettant le multiplexage/démultiplexage de différentes longueurs d'onde.

L'objet de l'invention est un procédé de fabrication d'un réseau réfléchissant pour la diffraction optique de rayons lumineux; le réseau offre une dispersion temporelle minimum, tout en gardant une grande luminosité et une résolution spectrale convenable.

Le réseau réfléchissant pour la diffraction optique de rayons lumineux comprend k sous-réseaux plans à sillons juxtaposés, les plans des sous-réseaux étant décalés en hauteur les uns par rapport aux autres selon la normale au plan de la surface réfléchissante des sillons, permettant ainsi réduire d'un facteur k la dispersion temporelle dudit réseau.

De préférence, les sous-réseaux sont de même largeur et ont la même densité de sillons, et les sillons de même rang sont sur un même plan parallèle au plan du réseau.

Plus particulièrement, la surface réfléchissante des sillons faisant un angle d'inclinaison i avec le plan du sous-réseau correspondant, le plan de chaque sous-réseau fait un angle d'inclinaison i avec le plan du réseau.

Selon une première variante, il comprend les étapes suivantes :

- réalisation de k cales triangle-rectangle identiques en verre ou silice ;
- assemblage de k cales sur une plaque de verre ou de silice, en sorte que les hypoténuses desdites cales forment k plans juxtaposés de même inclinaison i par rapport au plan de la plaque ; et
- réalisation d'un sous-réseau à sillons sur l'hypoténuse de chacune des cales.

Selon une autre variante, le procédé comprend la réalisation de k plans d'inclinaison i juxtaposés, par abrasion, dans un bloc parallélépipédique de verre ou de silice et leur gravure pour former k sous-réseaux à sillons.

D'autres caractéristiques et avantages de l'invention sont donnés dans la description suivante, faite à titre indicatif et non limitatif de l'invention, en référence aux dessins annexés dans lesquels :

- la figure 1 déjà décrite représente un dispositif d'étude d'impulsions lumineuses ultra-courtes ;
- la figure 2 déjà décrite illustre schématiquement le phénomène de différence de marche optique appliqué à un réseau plan réfléchissant à sillon ;
- la figure 3 représente schématiquement la section droite d'un réseau réfléchissant selon l'invention ;
- la figure 4 représente la section droite d'un réseau obtenu par un procédé de fabrication selon l'invention et
- la figure 5 représente la section droite d'un réseau obtenu par un autre procédé de fabrication selon l'invention.

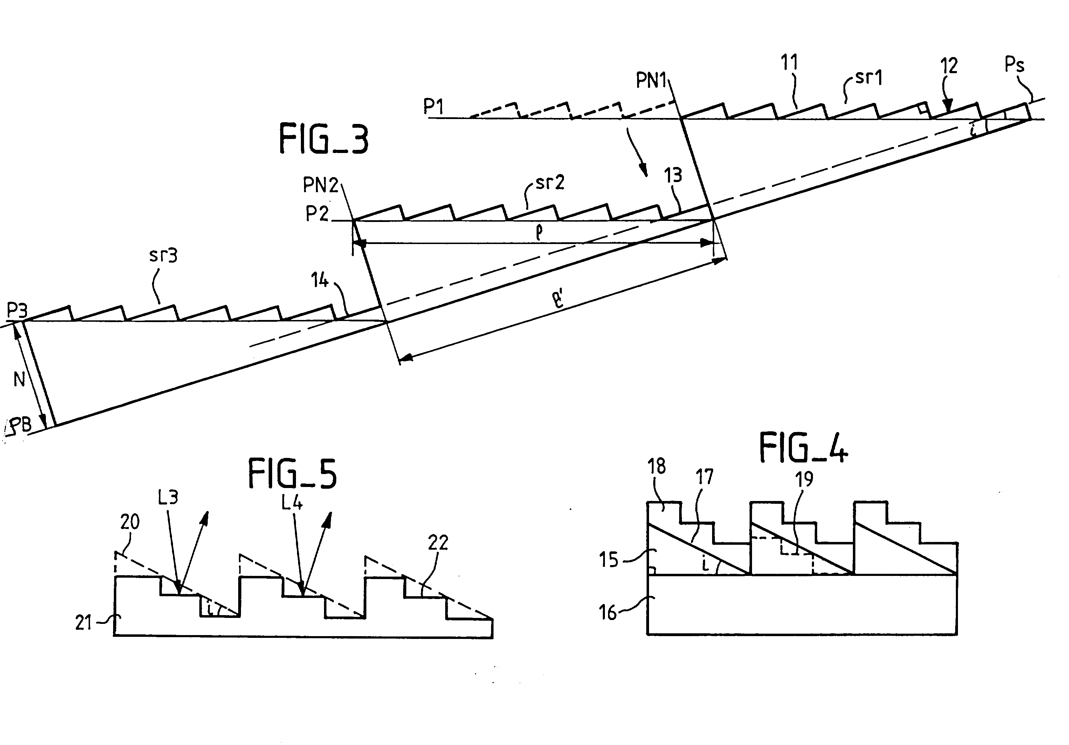

La figure 3 représente schématiquement une section droite d'un réseau selon l'invention.

Le réseau comprend trois sous-réseaux plans sr1, sr2 et sr3. Leurs plans respectifs P1, P2 et P3 sont parallèles et de préférence équidistants.

Les sillons 11 ont une section droite triangulaire (triangle-rectangle dans l'exemple représenté), la surface réfléchissante 12 d'un sillon est orientée selon un plan Ps d'inclinaison i par rapport aux plans P1, P2, P3 des sous-réseaux.

Selon l'invention, les sous-réseaux sont juxtaposés et décalés en hauteur les uns par rapport aux autres selon la normale à la surface réfléchissante des sillons, c'est à dire selon la normale au plan Ps d'inclinaison i.

De manière imagée, par rapport à un réseau plan à sillons placé dans le plan P1, on divise ce réseau en k parties (ici k = 3), et on fait glisser chaque partie sur la normale au plan Ps passant par la coupure entre cette partie et la partie précédente.

Au final, le réseau obtenu a une base PB orientée dans un plan parallèle aux surfaces réfléchissantes des sillons et comprend k plans P1, P2, P3 successifs, juxtaposés, d'inclinaison i par rapport à la base PB du réseau, et sur chacun desquels on a un sous-réseau respectif sr1, sr2, sr3.

En plus de la perturbation périodique des sillons, on a la perturbation due au décalage des plans des sous-réseaux.

Il est donc avantageux d'utiliser k sous-réseaux identiques : largeur 1, profil des sillons, densité de traits (sillons) N.

De manière simplifiée, si le réseau de départ à une largeur D, on le divise en k parties de largeur 1 (k sous-réseaux). On a alors D = kl.

La plus petite différence de longueur d'onde $\Delta\lambda$ que l'on peut distinguer par le réseau selon l'invention, est fonction du nombre de traits (sillons) d'un sous-réseau, est donc changée par rapport à un réseau plan de largeur D = kl et de mêmes caractéristiques (densité N, profil). On a donc $\Delta\lambda = \lambda/lN = \lambda k/DN$.

La différence de marche optique maximale du réseau selon l'invention devient la différence de marche optique d'un sous-réseau. Dans l'exemple de la figure 3, les trois sous-réseaux sont identiques : largeur 1, densité N, même profil des sillons. Et ils ont été avantageusement décalés de la hauteur z d'un sous-réseau. Les sillons de même rang, par exemple des sillons 12, 13 et 14 sont ainsi sur le même plan Ps : le décalage des sous-réseaux permet ainsi de rattraper la différence de chemin optique du sous-réseau précédent.

Ce phénomène est représenté sur la figure 5 : les rayons L3 et L4 qui arrivent sur des sillons de même rang parcourent le même chemin optique. Dans ce cas représenté, la différence de marche optique maximale est donnée par :

$$\Delta\gamma = lN\lambda = DN\lambda/k$$

et la dispersion temporelle, par :

$$\Delta t = DN\lambda/kC.$$

Par rapport à un réseau plan de largeur D, le réseau selon l'invention permet ainsi de réduire la dispersion temporelle d'un rapport k.

Si les pas des sous-réseaux sont identiques, mais que le décalage n'est pas exactement égal à la hauteur d'un sous-réseau (inférieur ou supérieur), la dispersion temporelle maximale du sous-réseau est égale au maximum des dispersions temporelles des sous-réseaux. Cependant, le réseau continue à fonctionner correctement, la résolution spectrale en pratique est toujours celle d'un sous-réseau. D'autre part, le réseau selon l'invention garde la même luminosité qu'un réseau plan de largeur D.

Un procédé de fabrication d'un réseau selon l'invention est illustré sur la figure 4, comprenant k sous-réseaux identiques.

Il comprend la réalisation de k cales triangle-rectangle identiques (15) en verre ou silice et l'assemblage de ces k cales sur une plaque 16 de verre ou de silice, en sorte que l'hypoténuse 17 de ces cales forme k plans juxtaposés de même inclinaison i par rapport au plan de la plaque 16. L'assemblage peut se faire par exemple par collage.

Un sous-réseau respectif 18 est placé sur l'hypoténuse de chacune de ces cales.

Dans une première variante, les sous-réseaux sont obtenus par découpage d'un réseau plan à sillons gravé sur une lame de verre ou de silice. Ils sont ensuite assemblés sur l'hypoténuse des cales. De préférence, la lame de verre est fine, de l'ordre de un millimètre. L'assemblage se fait par exemple par collage.

Dans une deuxième variante, les sous-réseaux sont directement gravés sur l'hypoténuse des cales. Le sous-réseau 19 obtenu selon cette variante est représenté en pointillé sur la figure 4.

Un autre procédé de fabrication d'un réseau selon l'invention représenté sur la figure 5 comprend la réalisation de k plans 20 d'inclinaison i successifs dans un bloc parallélépipédique de verre ou de silice, par abrasion, et la gravure de ces plans pour réaliser les k sous-réseaux 22 à sillons.

La gravure se fait dans tous les cas selon des procédés bien connus, mécaniques par un diamant ou holographiques, sur des surfaces optiquement polies sur lesquelles est déposée une mince couche métallique (couche d'aluminium de quelques micromètres d'épaisseur) ou une résine photosensible.

## Revendications

1. Procédé de fabrication d'un réseau réfléchissant pour la diffraction optique de rayons lumineux, le réseau comprenant k sous-réseaux plans à sillons, juxtaposés, les plans des sous-réseaux étant décalés en hauteur les uns par rapport aux autres selon la normale au plan du réseau,
caractérisé en ce qu'il comprend les étapes suivantes :

   - réalisation de k cales triangle-rectangle (15) identiques en verre ou silice ;
   - assemblage des k cales sur une plaque (16) de verre ou de silice, en sorte que les hypoténuses (17) desdites cales forment k plans juxtaposés de même inclinaison (i) par rapport au plan de la plaque; et
   - réalisation d'un sous-réseau (18;19) à sillons sur l'hypoténuse de chacune desdites cales.

2. Procédé de fabrication selon la revendication 1, caractérisé en ce qu'il comprend la réalisation d'un réseau plan à sillons par gravure d'une lame de verre ou de silice et le découpage du réseau obtenu en k sous-réseaux (18) à assembler sur ledites cales.

3. Procédé de fabrication selon la revendication 2, caractérisé en ce que la lame a une épaisseur de l'ordre de un millimètre.

4. Procédé de fabrication selon l'une des revendications 2 ou 3, caractérisé en ce que la gravure est mécanique ou obtenue par holographie.

5. Procédé de fabrication selon la revendication 1, caractérisé en ce que l'hypoténuse de chacune des cales est gravée pour former lesdits sous-réseaux (19) à sillons.

6. Procédé de fabrication d'un réseau réfléchissant pour la diffraction optique de rayons lumineux, le réseau comprenant k sous-réseaux plans à sillons, juxtaposés, les plans des sous-réseaux étant décalés en hauteur les uns par rapport aux autres selon la normale au plan du réseau,
caractérisé en ce qu'il comprend la réalisation de k plans (20) d'inclinaison (i) juxtaposés, par abrasion, dans un bloc (21) parallélépipédique de verre ou de silice et leur gravure pour former k sous-réseaux (22) à sillons.

## Patentansprüche

1. Herstellungsverfahren eines reflektierenden Gitters für die Diffraktion bzw. Beugung von Lichtstrahlen, wobei das Gitter k plane Teilgitter mit Rillen umfaßt, nebeneinanderliegend, und die Ebenen der Teilgitter entsprechend der Gitterebenen-Normalen zueinander höhenversetzt sind,
**dadurch gekennzeichnet,**
daß es die folgenden Schritte umfaßt:

- Herstellen von k identischen rechtwinklig-dreieckigen Keilen (15) aus Glas oder Siliciumdioxid;
- Zusammenbau der k Keile mit einer Platte (16) aus Glas oder Siliciumdioxid, so daß die Hypotenusen (17) besagter Keile k nebeneinanderliegende plane Ebenen derselben Neigung (i) bezüglich der Plattenebene bilden; und
- Herstellen eines Teilgitters (18; 19) mit Rillen auf der Hypotenuse jedes der genannten Keile.

2. Herstellungsverfahren nach Anspruch 1, dadurch gekennzeichnet, daß es die Herstellung eines planen Gitters mit Rillen durch Ätzung eines Glas- oder Siliciumdioxidplättchens und das Zerschneiden des hergestellten Gitters in k Teilgitter (18) umfaßt, die mit den genannten Keilen zusammengebaut werden.

3. Herstellungsverfahren nach Anspruch 2, dadurch gekennzeichnet, daß das Plättchen eine Dicke in der Größenordnung von einem Millimeter hat.

4. Herstellungsverfahren nach einem der Ansprüche 2 oder 3, dadurch gekennzeichnet, daß das Ätzen mechanisch oder mittels Holographie erfolgt.

5. Herstellungsverfahren nach Anspruch 1, dadurch gekennzeichnet, daß die Hypotenuse jedes Keils geätzt wird, um die genannten Teilgitter (19) mit Rillen zu bilden.

6. Herstellungsverfahren eines reflektierenden Gitters für die optische Diffraktion bzw. Beugung von Lichtstrahlen, wobei das Gitter k plane Teilgitter mit Rillen umfaßt, nebeneinanderliegend, und die Ebenen der Teilgitter entsprechend der Gitterebenen-Normalen zueinander höhenversetzt sind,
**dadurch gekennzeichnet,**
daß es die Herstellung von k nebeneinanderliegenden Ebenen (20) der Neigung (i) mittels Abrasion in einem parallelflachen Block (21) aus Glas oder Siliciumdioxid und ihr Ätzen umfaßt, um k Teilgitter (22) mit Rillen zu bilden.

another in height along the perpendicular to the system plane, characterised in that it consists of the following steps:

- making k identical, triangular-rectangular blocks(15) in glass or silica;
- assembling the k blocks on a glass or silica plate (16) so that the hypotenuses of said blocks form k juxtaposed planes having the same inclination (i) relative to the plane of the plate; and
- making a sub-system (12; 19) with grooves on the hypotenuse of each of said blocks.

2. A manufacturing method as claimed in claim 1, characterised in that it consists in making a planar system with grooves by etching a glass or silica plate and cutting the system obtained into k sub-systems (12) to be assembled on said blocks.

3. A manufacturing method as claimed in claim 2, characterised in that the plate is of a thickness in the order of one millimetre.

4. A manufacturing method as claimed in claims 2 or 3, characterised in that the etching is performed mechanically or by holography.

5. A manufacturing method as claimed in claim 1, characterised in that the hypotenuse of each of the blocks is etched to form said sub-systems (19) with grooves.

6. A method of manufacturing a reflecting system for optically diffracting light rays, the system comprising k juxtaposed, planar sub-systems with grooves, the planes of the sub-systems being offset at a height from one another along the perpendicular to the system plane, characterised in that it consists in making k juxtaposed planes (2) of an inclination (i) by means of abrasion on a parallelepipedic block of glass or silica and etching such so as to form k sub-systems (22) with grooves.

## Claims

1. A method of manufacturing a reflecting system for optically diffracting light rays, the system comprising k juxtaposed, planar sub-systems with grooves, the planes of the sub-systems being offset from one

FIG_1

FIG_2

FIG_3

FIG_5

FIG_4

EP 0 715 189 B1